# EUROPEAN PATENT SPECIFICATION

(11) **EP 1 959 709 B1**
(45) Date of publication and mention of the grant of the patent: **26.08.2015**
(21) Application number: 08152967.9
(22) Date of filing: 19.05.2000
(51) Int. Cl.: H04W 72/12

(54) **Prioritization and flow control of a spread spectrum multiuser channel**
Priorisierung und Flusskontrolle eines Mehrbenutzerkanals mit Spreizspektrum
Priorisation et contrôle de flux d'un canal multiutilisateur à dispersion spectrale

(30) Priority: 20.05.1999 US 135073 P
(43) Date of publication of application: 20.08.2008
(62) Divisional of application: 02006637.9
(73) Proprietor: InterDigital Technology Corporation, Wilmington, DE 19809 (US)
(72) Inventor: Terry, Stephen E., Northport, NY 11768 (US)
(74) Representative: Badel, Xavier Claude Yves

(56) References cited:
- US-A- 5 317 562
- US-A- 5 802 310
- "Universal Mobile Telecommunications System (UMTS); MAC protocol specification (3G TS 25.321 version 2.0.0 Release 1999); ETSI TS 125 321" ETSI STANDARDS, LIS, SOPHIA ANTIPOLIS CEDEX, FRANCE, no. V2.0.0, April 1999 (1999-04), XP002499238
- YANG C -Q ET AL: "A TAXONOMY FOR CONGESTION CONTROL ALGORITHMS IN PACKET SWITCHING NETWORKS" IEEE NETWORK,IEEE INC. NEW YORK,US, vol. 9, no. 4, 1 July 1995 (1995-07-01), pages 34-45, XP000526590 ISSN: 0890-8044

## Description

### BACKGROUND

The invention generally relates to channels used by multiple users in a wireless code division multiple access spread spectrum system. More specifically, the invention relates to a system and method of prioritizing and controlling the flow of data for common and shared channels in a spread spectrum system.

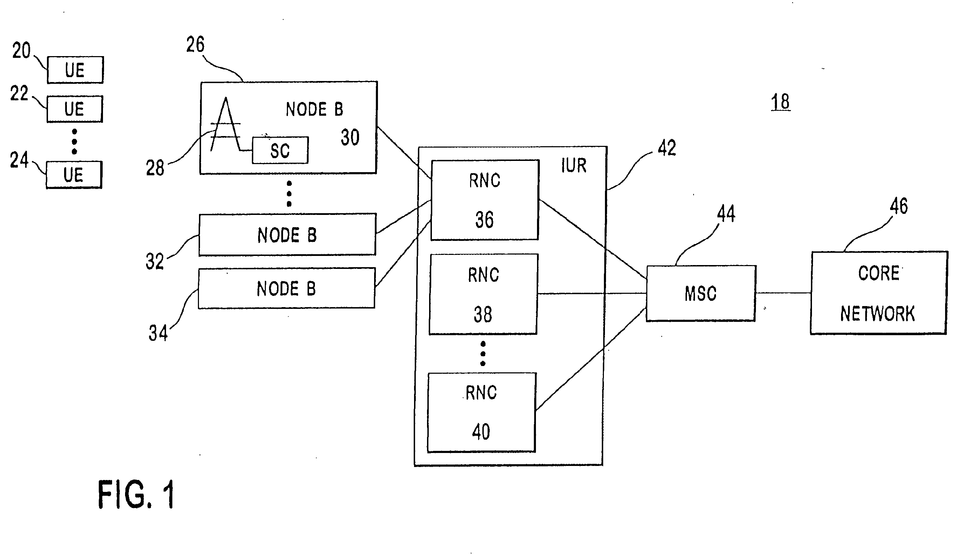

Figure 1 illustrates a simplified wireless spread spectrum code division multiple access (CDMA) communication system 18. A node b 26 within the system 18 communicates with associated user equipment 20-24 (UE). The node b 26 has a single site controller (SC) 30 associated with either a single (shown in Figure 1) or multiple base stations 28. A Group of node bs 26, 32, 34 is connected to a radio network controller (RNC) 36. To transfer communications between RNCs 36-40, an interface between the RNCs (IUR) 42 is utilized. Each RNC 36-40 is connected to a mobile switching center (MSC) 44 which in turn is connected to the core network 46.

To communicate within the system 18, many types of communication channels are used, such as dedicated, shared and common. Dedicated channels transfer data between a node b 26 and a particular UE 20-24. Common and shared channels are used by multiple UEs 20-24 or users. All of these channels carry a variety of data including traffic, control and signaling data.

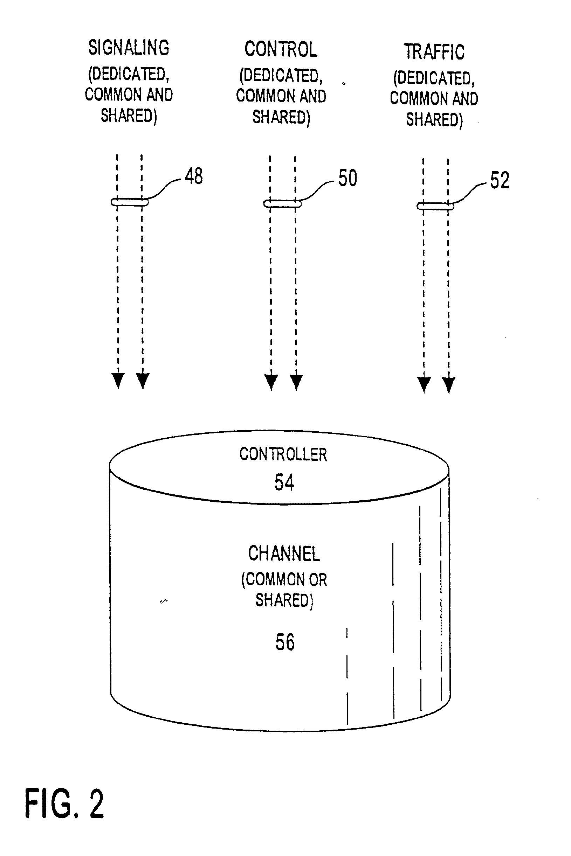

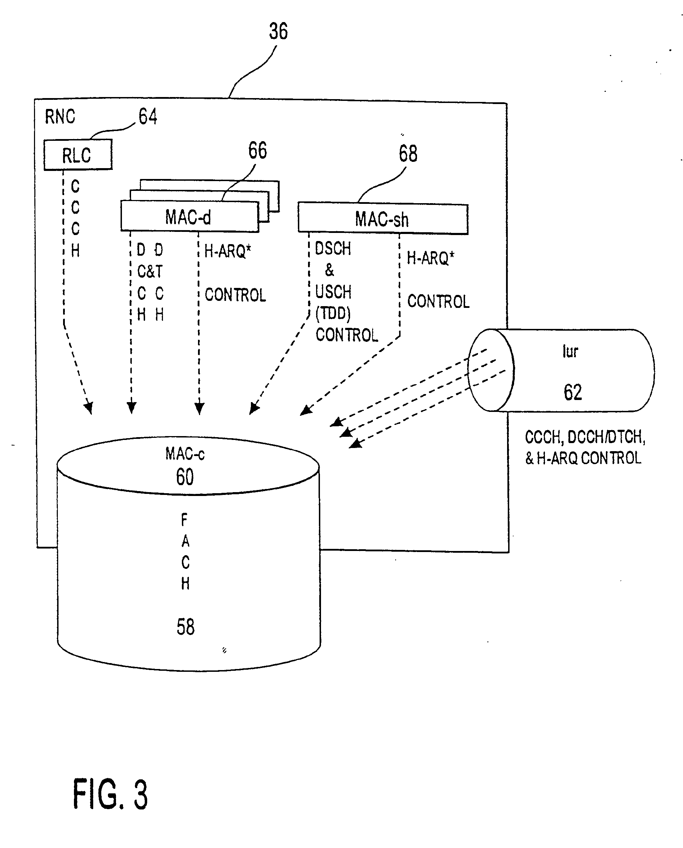

Since shared and common channels carry data for different users, data is sent using protocol data units (PDUs) or packets. As shown in Figure 2, to regulate the flow of data from differing sources 48-52 into a channel 56, a controller 54 is used. One common channel used for transmitting data to the UEs 20-24 is the forward access common channel (FACH) 58. As shown in Figure 3, the FACH 58 originates in a RNC 36 and is sent to a node b 28-34 for wireless transmission as a spread spectrum signal to the UEs 20-24. The FACH 58 carriers several data types from various sources, such as a common control channel (CCCH), dedicated control and traffic channel (DCCH and DTCH), and a downlink and uplink share channel (DSCH and USCH) control signaling. The FACH 58 also carries control signaling out of band, such as hybrid automatic repeat request (H-ARQ), and similar data transmitted via the IUR 62 from other RNCs 38-40, such as CCCH, DCCH, DTCH and H-ARQ control data.

Various controllers are used by the RNC 36 to control the flow of data. A radio link controller (RLC) 64 handles the CCCH. The dedicated medium access controller (MAC-d) 66 handles the DCCH, the DTCH and some out of band H-ARQ signaling. The shared medium access controller (MAC-sh) 68 handles the DSCH, USCH control signaling and out of band H-ARQ control signaling. Controlling the FACH 58 is the common medium access controller (MAC-c) 60.

Due to the multiple sources of data 48-52 that can be transmitted over a common or shared channel, the channel controllers 54 queue the data prior to transmission. If a large backlog develops in the queue, data in the queue develops a latency. A large latency of certain data such as control data will result in the failure of a channel. To alleviate this problem, the prior art either flushed the queue to reduce congestion or rerouted the data. Flushing the queue results in the loss of data and requires retransmission which is undesirable. Rerouting data already queued creates a duplication of data within the system and does not resolve the existing congestion. According, it is desirable to reduce the latency of data for shared and common channels without the problems associated with the prior art.

TS 25.321 V2.0.0 (1999-04), 3GPP, "MAC protocol specification" discloses a traffic related UTRAN side MAC architecture involving a MAC-c, MAC-sh and MAC-d.

### SUMMARY

The invention is defined in the appended claims.

Packet data from a plurality of sources is received at a controller associated with the multiuser channel. Each packet of the packet data is prioritized based on in part the reroutability of a class of data types. Each packet is scheduled for transmission over the multiuser channel based on in part the prioritization. A backlog of packet data queued is tracked for transfer over the multiuser channel. Based on in part the tracked queue, the flow of data from each data source is limited.

### BRIEF DESCRIPTION OF THE DRAWINGS

**Figure 1** is a simplified illustration of a wireless spread spectrum communication system.
**Figure 2** is an illustration of data flowing into a common or shared channel.
**Figure 3** is an illustration of data flowing into a FACH channel within a RNC.
**Figure 4** is an illustration of a prioritization scheme.
**Figure 5** is a prioritization scheme for use with a FACH channel.
**Figure 6** depicts a reservation mechanism used with a common or shared channel.
**Figure 7** depicts data source windows used with a common or shared channel.

### DETAILED DESCRIPTION OF THE PREFERRED EMBODIMENTS

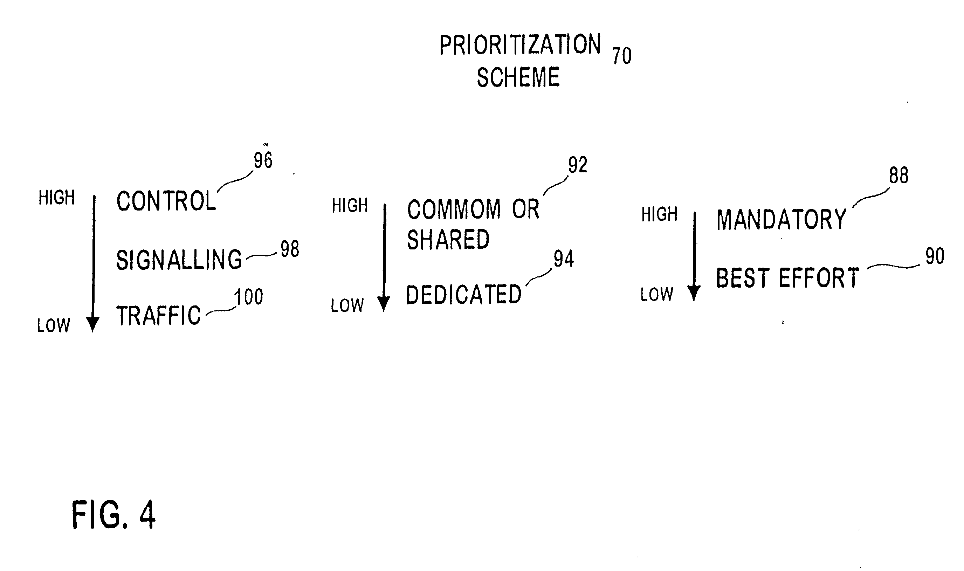

Data prioritization **70** is used to reduce data latency in a multiuser channel controller **54** as illustrated in **Figure 4****.** For a particular common or shared channel, certain data must be transmitted on that channel and is shown in the figure as "mandatory" **88.** Other data is preferably sent on the particular channel but may be rerouted to another channel, such as a dedicated channel. This data is referred to as "best effort" **90.** Since "mandatory" data **88** is not reroutable, it takes priority over "best effort" data **90.**

The type of the data within a packet, such as control **96,** signaling **98** and traffic data **100,** is also used for prioritization. To accomplish prioritization of the data type, control **96** and signaling **98** data packets are separated from traffic data packets **100.** One approach to separating the packets is to group similar data type packets together prior to reception at the controller **54.** Alternately, packets sent by each channel prior to reception by the controller **54** are provided with a flag or identifier indicating the packets' data type.

Since a prolonged delay in the transfer of control **96** or signaling **98** data results in a frozen channel, control **96** and signaling **98** data are given a higher priority than traffic data **100.** Additionally, data associated with multiple users, common or shared **92,** has a higher priority than data for a single user, dedicated **94.** The data prioritization scheme is typically stored in the software of the multiuser channel's controller.

During periods of high congestion, data is rerouted to other channels based on its priority **70.** For instance, best effort dedicated traffic data is rerouted and mandatory common control data is not. By rerouting data prior to queuing, retransmissions will not be required. Accordingly, the amount of queued data is reduced resulting in lower data latency. Additionally, since the rerouted data is never queued, the duplication of data as experienced in the prior art is eliminated.

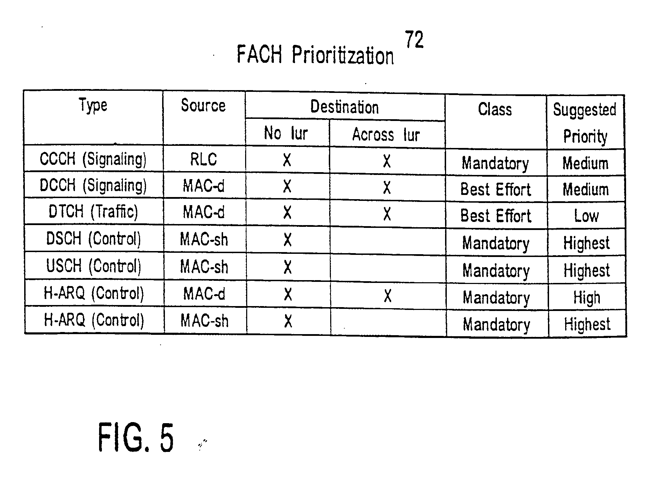

A prioritization scheme **72** for use with a FACH 58 is shown in **Figure 5****.** Since the DSCH, H-ARQ of the MAC-sh have mandatory shared control data, they have the highest priority, highest. Although the H-ARQ of the MAC-d has mandatory control data, being dedicated it is assigned a slightly lower priority, high. The CCCH and DCCH are used for signaling and have the next level of priority, medium. The lowest level of priority is assigned to the DTCH because it has best effort dedicated traffic data.

To facilitate this prioritization scheme **72** for the FACH 58, modifications to the RNC **36** are required. As shown in **Figure 3****,** the prior art MAC-d **66** controls the DCCH, DTCH and MAC-d's H-ARQ. As shown in **Figure 5****,** each of these sources has a different priority. Since this data is multiplexed prior to prioritization at the MAC-d **66,** the multiplexer of the MAC-d **66** is moved to the MAC-c **60** to allow prioritization at the MAC-c **60.** Alternatively, the MAC-d **66** may send the priority and class (mandatory or best effort), such as by a flag or identifier, of each packet of the multiplexed data for prioritization at the MAC-c **60.** The data controlled by the RLC **64** and the MAC-sh **68** have equal priority and accordingly, neither requires modification. Using the stored priority list, the data from the various sources is scheduled for transmission and rerouted during periods of high congestion.

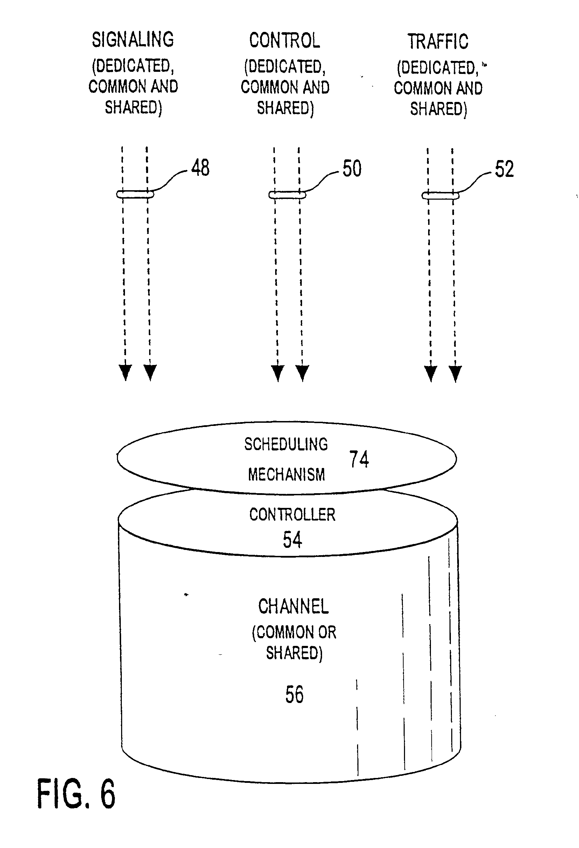

Another technique for reducing the latency of data which may be combined with prioritization is to control the flow of data between the various controllers. As shown in **Figure 6****,** a scheduling mechanism **74** is used to regulate the data entering the common or shared channel **56.** The scheduling mechanism **74** tracks the backlog of data in the controller's queue. If the mechanism **74** recognizes congestion and that the data will not be transmitted in a certain period of time, access to the channel **56** limits the flow of data from the individual data sources. The individual sources will recognize the need to reroute data or to not attempt transmission. Using a flow control mechanism with a FACH, MAC and RLC (Layer 2), the latency of signaling is decreased thus increasing efficiency.

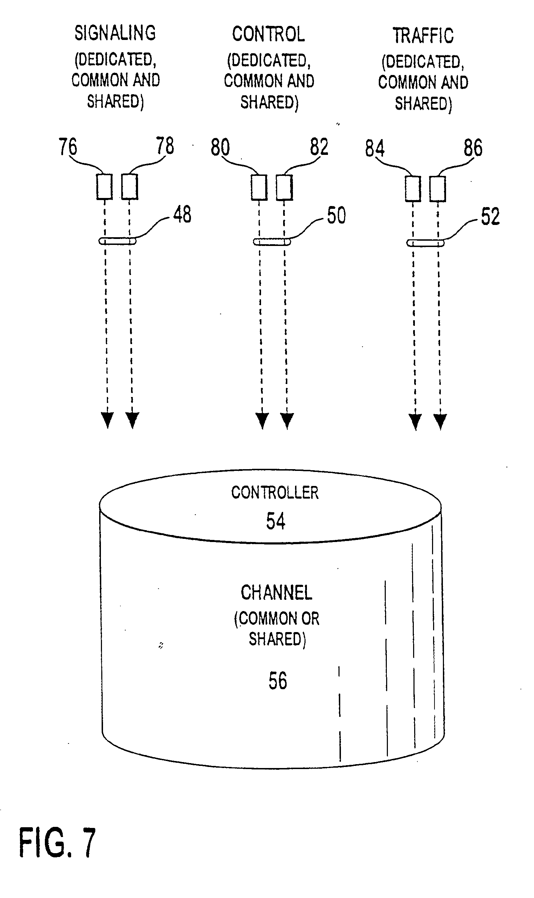

To prevent the monopolization of the common or shared channel **56** by one data source **48-52** variable windows **76-86** may be used as shown in **Figure 7****.** Each data source **48-52** has a window or multiple windows **76-86** of outstanding data in the queue that it is permitted. The size of the window **76** is based on the requirements of the specific source. The window **76** is dynamically adjusted in response to the availability of the queue. As the availability of the channel increases, the size of the windows increases which increases the number of outstanding packets. Conversely, as the availability decreases, the size of the windows decreases which decreases the number of outstanding packets. As a result of the decreased windows, the data sources either reroute or stop sending packets to the windows.

### Itemized list

Item 1. A scheduling mechanism (74) for controlling packet data from multiple types of data sources (48-52), including data sources (48-52) having reroutable data and data sources (48-52) having non-reroutable data, the multiple types of data sources (48-52) flowing into a multiuser channel (56) in a wireless spread spectrum code division multiple access communication system, the mechanism (74) characterized by:
   a queue (54) associated with the multiuser channel (56) having an input configured to receive incoming packet data from a plurality of data source queues (48-52), the multiuser channel queue (54) outputting the received packet data for transmission over the multiuser channel (56);
   the plurality of data source queues (76-86), each data source queue (76-86) uniquely associated with each data source (48-52) and having an input configured to receive data from that queue's data source (48-52), each data source queue (48-52) capable of varying its capacity; and
   wherein the varying capacity of each data source queue (48-52) changes based on in part an availability of the multiuser channel queue (54).
Item 2. The mechanism (74) of item 1 further characterized by the varying capacity of each data source queue (48-52) decreases as the multiuser channel availability increases and increases as the multiuser channel availability decreases.

## Claims

1. A code division multiple access, CDMA, communication device (36) comprising:
a first medium access controller, MAC, entity (66) configured to output a first control channel and a dedicated traffic channel, DTCH, the first MAC entity being a MAC-dedicated, MAC-d, entity and the first control channel being a dedicated control channel, DCCH; and
a second MAC entity (60) configured to generate an access channel (56, 58), the second MAC entity including:
a channel multiplexer configured to receive data, the data being carried by the first control channel, the DTCH, and a second control channel, the channel multiplexer also being configured to multiplex the received data,
**Characterized in that** the second MAC entity comprises
a scheduling mechanism (74) configured to receive the multiplexed data and schedule the multiplexed data for transmission on the access channel according to a priority of the multiplexed data, which priority is based on a type of the multiplexed data.

2. The CDMA communication device of claim 1, wherein the second MAC entity is further configured to limit an amount of the multiplexed data transmitted on the access channel.

3. The CDMA communication device of claim 1 or 2, wherein the second MAC entity is further configured to limit a portion of the multiplexed data transmitted on the access channel based on whether the portion of the multiplexed data is associated with the first control channel, the second control channel, or the DTCH.

4. The CDMA communication device of any one of the preceding claims, wherein a window (50, 52) is associated with each of the first control channel, the second control channel, and the DTCH, the second MAC entity is further configured to limit an amount of the multiplexed data transmitted on the access channel by controlling a size of the window associated with said each of the first control channel, the second control channel, and the DTCH.

5. The CDMA communication device of any one of the preceding claims, the CDMA communication device further comprising a flow control entity configured to limit buffering of a portion of the received data in the second MAC entity, the portion of the received data being associated with the first control channel and the DTCH.

6. The CDMA communication device of any one of the preceding claims, wherein the scheduling mechanism is further configured to schedule the multiplexed data for transmission over a downlink shared channel, DSCH.

7. The CDMA communication device of any one of the preceding claims, wherein the received data includes an indicator of the priority.

8. The CDMA communication device of any one of the preceding claims, wherein the communication device is a radio network controller, RNC.

9. The CDMA communication device of any one of the preceding claims, wherein the access channel is a forward access channel, FACH.

10. The CDMA communication device of any one of the preceding claims, wherein the scheduling mechanism is configured to supply the access channel to a Node-B (26), such that the Node-B transmits the access channel to a plurality of user equipments (20-24), UEs.

11. A communication method, comprising:
outputting a first control channel and a dedicated traffic channel, DTCH, with a first medium access controller, MAC, entity, the first MAC entity being a MAC- dedicated, MAC-d, entity, and the first control channel being a dedicated control channel, DCCH;
receiving the first control channel, the DTCH, and a second control channel, with a channel multiplexer of a second MAC entity, the first control channel, the second control channel, and the DTCH carrying data, and the second MAC entity being configured to output an access channel;
multiplexing the data with the channel multiplexer, the method **characterized by**:
scheduling, with a scheduling mechanism of the second MAC entity, the multiplexed data for transmission on the access channel according to a priority of the multiplexed data, which priority is based on a type of the multiplexed data.

12. The communication method of claim 11, further comprising limiting an amount of the multiplexed data transmitted on the access channel.

13. The communication method of claim 11 or 12, further comprising limiting a portion of the multiplexed data transmitted on the access channel based on whether the portion of the multiplexed data is associated with the first control channel, the second control channel, or the DTCH.

14. The communication method of any one of claims 11-13, wherein a window is associated with each of the first control channel, the second control channel, and the DTCH, the method further comprising limiting an amount of the multiplexed data transmitted on the access channel by controlling a size of the window associated with said each of the first control channel, the second control channel, and the DTCH.

15. The communication method of any one of claims 11-14, further comprising limiting buffering of a portion of the received data in the second MAC entity, the portion of the received data being associated with the first control channel and the DTCH.

16. The communication method of any one of claims 11-15, further comprising scheduling the multiplexed data for transmission over a downlink shared channel, DSCH.

17. The communication method of any one of claims 11-16, wherein the data includes an indicator of the priority.

18. The communication method of any one of claims 11-17, wherein the communication device is a radio network controller, RNC.

19. The communication method of any one of claims 11-18, wherein the access channel is a forward access channel, FACH.

20. The communication method of any one of claims 11-19, further comprising supplying the access channel to a Node-B, such that the Node-B transmits the access channel to a plurality of user equipments, UEs.

## Patentansprüche

1. Code Division Multiple Access (CDMA)-Kommunikationsgerät (36), das Folgendes umfasst:
eine erste Medium Access Controller (MAC)-Entität (66), die dafür konfiguriert ist, einen ersten Steuerkanal und einen Dedicated Traffic Channel (DTCH) auszugeben, wobei die erste MAC-Entität eine MAC-dedicated (MAC-d) Entität ist und der erste Steuerkanal ein dedizierter Steuerkanal (Dedicated Control Channel, DCCH) ist; und
eine zweite MAC-Entität (60), die dafür konfiguriert ist, einen Zugangskanal (56, 58) zu generieren, wobei die zweite MAC-Entität Folgendes enthält:
einen Kanalmultiplexierer, der dafür konfiguriert ist, Daten zu empfangen, wobei die Daten durch den ersten Steuerkanal, den DTCH und einen zweiten Steuerkanal transportiert werden, wobei der Kanalmultiplexierer des Weiteren dafür konfiguriert ist, die empfangenen Daten zu multiplexieren,
**dadurch gekennzeichnet, dass** die zweite MAC-Entität einen Disponierungsmechanismus (74) umfasst, die dafür konfiguriert ist, die multiplexierten Daten zu empfangen und die multiplexierten Daten zum Senden auf dem Zugangskanal gemäß einer Priorität der multiplexierten Daten zu disponieren, wobei die Priorität auf einem Typ der multiplexierten Daten basiert.

2. CDMA-Kommunikationsgerät nach Anspruch 1, wobei die zweite MAC-Entität des Weiteren dafür konfiguriert ist, einen Betrag der auf dem Zugangskanal gesendeten multiplexierten Daten zu begrenzen.

3. CDMA-Kommunikationsgerät nach Anspruch 1 oder 2, wobei die zweite MAC-Entität des Weiteren dafür konfiguriert ist, einen Teil der auf dem Zugangskanal gesendeten multiplexierten Daten auf der Basis dessen zu begrenzen, ob der Teil der multiplexierten Daten dem ersten Steuerkanal, dem zweiten Steuerkanal oder dem DTCH zugeordnet ist.

4. CDMA-Kommunikationsgerät nach einem der vorangehenden Ansprüche, wobei dem ersten Steuerkanal, dem zweiten Steuerkanal und dem DTCH jeweils ein Fenster (50, 52) zugeordnet ist, wobei die zweite MAC-Entität des Weiteren dafür konfiguriert ist, einen Betrag der auf dem Zugangskanal gesendeten multiplexierten Daten durch Steuern einer Größe des Fensters, das dem ersten Steuerkanal, dem zweiten Steuerkanal und dem DTCH jeweils zugeordnet ist, zu begrenzen.

5. CDMA-Kommunikationsgerät nach einem der vorangehenden Ansprüche, wobei das CDMA-Kommunikationsgerät des Weiteren eine Flusssteuerungsentität umfasst, die dafür konfiguriert ist, das Puffern eines Teils der empfangenen Daten in der zweiten MAC-Entität zu begrenzen, wobei der Teil der empfangenen Daten dem ersten Steuerkanal und dem DTCH zugeordnet ist.

6. CDMA-Kommunikationsgerät nach einem der vorangehenden Ansprüche, wobei der Disponierungsmechanismus des Weiteren dafür konfiguriert ist, die multiplexierten Daten zum Senden über einen Downlink Shared Channel (DSCH) zu disponieren.

7. CDMA-Kommunikationsgerät nach einem der vorangehenden Ansprüche, wobei die empfangenen Daten einen Indikator der Priorität enthalten.

8. CDMA-Kommunikationsgerät nach einem der vorangehenden Ansprüche, wobei das Kommunikationsgerät ein Radio Network Controller (RNC) ist.

9. CDMA-Kommunikationsgerät nach einem der vorangehenden Ansprüche, wobei der Zugangskanal ein Forward Access Channel (FACH) ist.

10. CDMA-Kommunikationsgerät nach einem der vorangehenden Ansprüche, wobei der Disponierungsmechanismus dafür konfiguriert ist, den Zugangskanal an einen Node-B (26) zu übermitteln, damit der Node-B den Zugangskanal an mehrere Nutzergeräte (User Equipments, UEs) (20-24) sendet.

11. Kommunikationsverfahren, das Folgendes umfasst:
Ausgeben eines ersten Steuerkanals und eines Dedicated Traffic Channel (DTCH) mit einer ersten Medium Access Controller (MAC)-Entität, wobei die erste MAC-Entität eine MAC-dedicated (MAC-d) Entität ist und der erste Steuerkanal ein dedizierter Steuerkanal (Dedicated Control Channel, DCCH) ist;
Empfangen des ersten Steuerkanals, des DTCH und eines zweiten Steuerkanals mit einem Kanalmultiplexierer einer zweiten MAC-Entität, wobei der erste Steuerkanal, der zweite Steuerkanal und der DTCH Daten transportieren und die zweite MAC-Entität dafür konfiguriert ist, einen Zugangskanal auszugeben;
Multiplexieren der Daten mit dem Kanalmultiplexierer,
wobei das Verfahren **gekennzeichnet ist durch**:
Disponieren, mit einem Disponierungsmechanismus der zweiten MAC-Entität, der multiplexierten Daten zum Senden auf dem Zugangskanal gemäß einer Priorität der multiplexierten Daten, wobei die Priorität auf einem Typ der multiplexierten Daten basiert.

12. Kommunikationsverfahren nach Anspruch 11, das des Weiteren umfasst, einen Betrag der auf dem Zugangskanal gesendeten multiplexierten Daten zu begrenzen.

13. Kommunikationsverfahren nach Anspruch 11 oder 12, das des Weiteren umfasst, einen Teil der auf dem Zugangskanal gesendeten multiplexierten Daten auf der Basis dessen, ob der Teil der multiplexierten Daten dem ersten Steuerkanal, dem zweiten Steuerkanal oder dem DTCH zugeordnet ist, zu begrenzen.

14. Kommunikationsverfahren nach einem der Ansprüche 11 bis 13, wobei dem ersten Steuerkanal, dem zweiten Steuerkanal und dem DTCH jeweils ein Fenster zugeordnet ist, wobei das Verfahren des Weiteren umfasst, einen Betrag der auf dem Zugangskanal gesendeten multiplexierten Daten durch Steuern einer Größe des Fensters, das dem ersten Steuerkanal, dem zweiten Steuerkanal und dem DTCH jeweils zugeordnet ist, zu begrenzen.

15. Kommunikationsverfahren nach einem der Ansprüche 11 bis 14, das des Weiteren umfasst, das Puffern eines Teils der empfangenen Daten in der zweiten MAC-Entität zu begrenzen, wobei der Teil der empfangenen Daten dem ersten Steuerkanal und dem DTCH zugeordnet ist.

16. Kommunikationsverfahren nach einem der Ansprüche 11 bis 15, das des Weiteren umfasst, die multiplexierten Daten zum Senden über einen Downlink Shared Channel (DSCH) zu disponieren.

17. Kommunikationsverfahren nach einem der Ansprüche 11 bis 16, wobei die Daten einen Indikator der Priorität enthalten.

18. Kommunikationsverfahren nach einem der Ansprüche 11 bis 17, wobei das Kommunikationsgerät ein Radio Network Controller (RNC) ist.

19. Kommunikationsverfahren nach einem der Ansprüche 11 bis 18, wobei der Zugangskanal ein Forward Access Channel (FACH) ist.

20. Kommunikationsverfahren nach einem der Ansprüche 11 bis 19, das des Weiteren umfasst, den Zugangskanal an einen Node-B zu übermitteln, damit der Node-B den Zugangskanal an mehrere Nutzergeräte (User Equipments, UEs) sendet.

## Revendications

1. Dispositif de communication à accès multiples par répartition de code, CDMA, (36) comprenant :
une première entité de commande d'accès au support, MAC, (66) configurée pour délivrer un premier canal de commande et un canal de trafic dédié, DTCH, la première entité MAC étant une entité MAC dédiée, MAC-d, et le premier canal de commande étant un canal de commande dédié, DCCH ; et
une deuxième entité MAC (60) configurée pour générer un canal d'accès (56, 58), la deuxième entité MAC comprenant :
un multiplexeur de canal configuré pour recevoir des données, les données étant portées par le premier canal de commande, le DTCH, et un deuxième canal de commande, le multiplexeur de canal étant également configuré pour multiplexer les données reçues,
**caractérisé en ce que** la deuxième entité MAC comprend un mécanisme d'ordonnancement (74) configuré pour recevoir les données multiplexées et pour ordonnancer les données multiplexées pour une transmission sur le canal d'accès en fonction d'une priorité des données multiplexées qui est basée sur un type des données multiplexées.

2. Dispositif de communication CDMA selon la revendication 1, dans lequel la deuxième entité MAC est en outre configurée pour limiter une quantité des données multiplexées transmises sur le canal d'accès.

3. Dispositif de communication CDMA selon la revendication 1 ou 2, dans lequel la deuxième entité MAC est en outre configurée pour limiter une portion des données multiplexées transmises sur le canal d'accès selon que la portion des données multiplexées est associée au premier canal de commande, au deuxième canal de commande ou au DTCH.

4. Dispositif de communication CDMA selon l'une quelconque des revendications précédentes, dans lequel une fenêtre (50, 52) est associée à chacun du premier canal de commande, du deuxième canal de commande et du DTCH, la deuxième entité MAC est en outre configurée pour limiter une quantité des données multiplexées transmises sur le canal d'accès en commandant une taille de la fenêtre associée à chacun du premier canal de commande, du deuxième canal de commande et du DTCH.

5. Dispositif de communication CDMA selon l'une quelconque des revendications précédentes, le dispositif de communication CDMA comprenant en outre une entité de commande de flux configurée pour limiter la mise en mémoire tampon d'une portion des données reçues dans la deuxième entité MAC, la portion des données reçues étant associée au premier canal de commande et au DTCH.

6. Dispositif de communication CDMA selon l'une quelconque des revendications précédentes, dans lequel le mécanisme d'ordonnancement est en outre configuré pour ordonnancer les données multiplexées pour une transmission sur un canal partagé de liaison descendante, DSCH.

7. Dispositif de communication CDMA selon l'une quelconque des revendications précédentes, dans lequel les données reçues comprennent un indicateur de la priorité.

8. Dispositif de communication CDMA selon l'une quelconque des revendications précédentes, dans lequel le dispositif de communication est un contrôleur de réseau radio, RNC.

9. Dispositif de communication CDMA selon l'une quelconque des revendications précédentes, dans lequel le canal d'accès est un canal d'accès sans voie de retour, FACH.

10. Dispositif de communication CDMA selon l'une quelconque des revendications précédentes, dans lequel le mécanisme d'ordonnancement est configuré pour fournir le canal d'accès à un noeud B (26), de sorte que le noeud B transmette le canal d'accès à une pluralité d'équipements utilisateurs, UE, (20-24).

11. Procédé de communication, comprenant :
la sortie d'un premier canal de commande et d'un canal de trafic dédié, DTCH, avec une première entité de commande d'accès au support, MAC, la première entité MAC étant une entité MAC dédiée, MAC-d, et le premier canal de commande étant un canal de commande dédié, DCCH;
la réception du premier canal de commande, DTCH, et d'un deuxième canal de commande, avec un multiplexeur de canal d'une deuxième entité MAC, le premier canal de commande, le deuxième canal de commande et le DTCH portant des données, et la deuxième entité MAC étant configurée pour délivrer un canal d'accès ;
le multiplexage des données avec le multiplexeur de canal,
le procédé étant **caractérisé par** :
l'ordonnancement, avec un mécanisme d'ordonnancement de la deuxième entité MAC, des données multiplexées pour une transmission sur le canal d'accès en fonction d'une priorité des données multiplexées qui est basée sur un type des données multiplexées.

12. Procédé de communication selon la revendication 11, comprenant en outre la limitation d'une quantité des données multiplexées transmises sur le canal d'accès.

13. Procédé de communication selon la revendication 11 ou 12, comprenant en outre la limitation d'une portion des données multiplexées transmises sur le canal d'accès selon que la portion des données multiplexées est associée au premier canal de commande, au deuxième canal de commande ou au DTCH.

14. Procédé de communication selon l'une quelconque des revendications 11 à 13, dans lequel une fenêtre est associée à chacun du premier canal de commande, du deuxième canal de commande et du DTCH, le procédé comprenant en outre la limitation d'une quantité des données multiplexées transmises sur le canal d'accès en commandant une taille de la fenêtre associée à chacun du premier canal de commande, du deuxième canal de commande et du DTCH.

15. Procédé de communication selon l'une quelconque des revendications 11 à 14, comprenant en outre la limitation de la mise en mémoire tampon d'une portion des données reçues dans la deuxième entité MAC, la portion des données reçues étant associée au premier canal de commande et au DTCH.

16. Procédé de communication selon l'une quelconque des revendications 11 à 15, comprenant en outre l'ordonnancement des données multiplexées pour une transmission sur un canal partagé de liaison descendante, DSCH.

17. Procédé de communication selon l'une quelconque des revendications 11 à 16, dans lequel les données reçues comprennent un indicateur de la priorité.

18. Procédé de communication selon l'une quelconque des revendications 11 à 17, dans lequel le dispositif de communication est un contrôleur de réseau radio, RNC.

19. Procédé de communication selon l'une quelconque des revendications 11 à 18, dans lequel le canal d'accès est un canal d'accès sans voie de retour, FACH.

20. Procédé de communication selon l'une quelconque des revendications 11 à 19, comprenant en outre la fourniture du canal d'accès à un noeud B, de sorte que le noeud B transmette le canal d'accès à une pluralité d'équipements utilisateurs, UE.
